Europäisches Patentamt

European Patent Office

Office européen des brevets

(19)

(11) **EP 1 089 236 A2**

(12) **EUROPÄISCHE PATENTANMELDUNG**

(43) Veröffentlichungstag:
04.04.2001 Patentblatt 2001/14

(51) Int. Cl.$^7$: **G06T 15/40**

(21) Anmeldenummer: 00203242.3

(22) Anmeldetag: 15.09.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.09.1999 DE 19945380**

(71) Anmelder:
• **Philips Corporate Intellectual Property GmbH**
**52064 Aachen (DE)**
Benannte Vertragsstaaten:
**DE**
• **Koninklijke Philips Electronics N.V.**
**5621 BA Eindhoven (NL)**
Benannte Vertragsstaaten:
**FR GB NL**

(72) Erfinder:
• **Grass, Michael**
**52064 Aachen (DE)**
• **Köhler, Thomas**
**52064 Aachen (DE)**
• **Proksa, Roland**
**52064 Aachen (DE)**

(74) Vertreter: **Zöllner, Christine**
**Philips Corporate**
**Intellectual Property GmbH**
**Habsburgerallee 11**
**52064 Aachen (DE)**

(54) **Verfahren zur Darstellung eines dreidimensionalen Objektes durch ein zweidimensionales Bild**

(57)     Die Erfindung betrifft ein Verfahren zur Visualisierung eines dreidimensionalen Datensatzes durch ein zweidimensionales Bild. Der dafür erforderliche Rechenaufwand wird dadurch erheblich reduziert, dass die Bilddaten des dreidimensionalen Datensatzes an den Gitterpunkten eines BCC-Gitters bestimmt werden und dass der einem Punkt zugeordneten Wert durch eine Interpolation der Bilddaten an 4 Gitterpunkten dieses BCC-Gitters berechnet wird, wie die Eckpunkte eines Tetraeders bilden.

EP 1 089 236 A2

Printed by Xerox (UK) Business Services
2.16.7 (HRS)/3.6

**Beschreibung**

Die Erfindung betrifft ein Verfahren zur Darstellung eines an den Gitterpunkten eines regelmäßigen Gitters durch einen dreidimensionalen Datensatz definierten Objektes durch ein zweidimensionales Bild, wobei die Bildwerte an den Bildpunkten, aus denen sich das zweidimensionale Bild zusammensetzt, aus den Bilddaten des dreidimensionalen Datensatzes abgeleitet werden, die je einem Strahl durch das Objekt zugeordnet sind. Außerdem bezieht sich die Erfindung auf ein bildgebendes System zur Durchführung dieses Verfahrens.

Verfahren der eingangs genannten Art sind in der medizinischen Diagnostik unter der Bezeichnung "volume rendering" oder "ray-tracing" bekannt. Diese Verfahren umfassen die Projektion (in der Regel eine Parallel-Projektion oder einer Kegelstrahl- Projektion) eines dreidimensionalen Objektes auf ein zweidimensionales Bild. Bei der Projektion des Objektes wird der Bildwert an einem Bildpunkt des zweidimensionalen Bildes aus den Bilddaten abgeleitet, die einem in der Projektionsrichtung verlaufenden Strahl durch das Objekt zugeordnet sind. Diese Bilddaten werden dabei (ggf. gewichtet) summiert, oder entsprechend ihrer Größe ausgewählt, beispielsweise das Minimum, der Medianwert oder das Maximum. Ein bevorzugtes Anwendungsgebiet ergibt sich in Verbindung mit den durch ein C-Bogen-System akquirierten Bildern, bei denen das Objekt aus einer Vielzahl von Richtungen durchstrahlt wird und aus denen ein dreidimensionaler Datensatz rekonstruiert wird, woraus dann mit dem eingangs genannten Verfahren ein zweidimensionales Bild für eine vorgebbare Projektionsgeometrie erzeugt wird.

Um den Bildwert eines Bildpunktes berechnen zu können, müssen Projektions-Bilddaten an den verschiedenen Punkten auf dem Strahl bekannt sein. Diese Punkte fallen in der Regel jedoch nicht mit den Gitterpunkten zusammen, an denen die darzustellende Funktion - z.B. die Absorption der Röntgenstrahlung - definiert ist. Die Projektions-Bilddaten müssen daher durch eine Interpolation aus den Bilddaten des dreidimensionalen Datensatzes abgeleitet werden. In der Regel sind die Bilddaten des dreidimensionalen Datensatzes an den Gitterpunkten eines periodischen kubischen Gitters definiert, das sich aus Einheiten mit je acht Gitterpunkten an den Ecken eines Kubus zusammensetzt. Für jeden Punkt ist daher eine Interpolation aus den Bilddaten an den acht Gitterpunkten des Kubus erforderlich, der den betreffenden Punkt umschließt. Eine solche trilineare Interpolation erfordert 14 Additionen und 7 Multiplikationen.

Da diese Interpolation für alle Punkte auf dem Strahl und ebenso für alle Strahlen wiederholt werden muß, ist eine erhebliche Rechenleistung bzw. relativ lange Rechenzeiten erforderlich. Man kann die Rechenzeit allerdings dadurch verkürzen, dass man die Bilddaten von den Gitterpunkten, die jeweils einen Kubus bilden können, in 8 verschiedenen Speichern an der gleichen Adresse speichert. Diese Bilddaten können dann gleichzeitig aufgerufen werden. Die Verkürzung der Rechenzeit wird aber durch einen erhöhten Hardware-Aufwand erkauft.

Aufgabe der vorliegenden Erfindung ist es, den Aufwand für die Durchführung eines derartigen Verfahrens zu reduzieren.

Diese Aufgabe wird ausgehend von dem Verfahren der eingangs genannten Art gelöst durch die folgenden Schritte:

a) Ermittlung der Bilddaten des dreidimensionalen Datensatzes an den Gitterpunkten eines BCC-Gitters,
b) Berechnung von Projektions-Bilddaten an Punkten auf den Strahlen durch Interpolation der Bilddaten an vier Gitterpunkten des BCC-Gitters, die die Eckpunkte eines Tetraeders bilden, das je einen der Punkte umschließt,
c) Ableitung je eines Bildwertes aus den je einem der Strahlen zugeordneten Projektions-Bilddaten.

Ein wesentlicher Schritt ist die Ermittlung der Bilddaten an den Gitterpunkten eines BCC-Gitters. Ein BCC-Gitter besteht aus zwei identischen, kubischen Subgittern, die so gegeneinander versetzt sind, dass jeder Gitterpunkt des einen Subgitters im Zentrum je eines Kubus aus dem anderen Subgitter liegt - und umgekehrt. Solche BCC (=body centered cubic)-Gitter sind aus der Festkörper-Physik bekannt. Gemäß IEEE Trans on Nuclear Science, Vol. 42, Nr. 4 (1995), Seiten 1361-1370 hat man auch schon in der medizinischen Bildverarbeitung Bilddaten an den Gitterpunkten eines derartigen Gitters rekonstruiert.

Die Erfindung beruht auf der Erkenntnis, dass die Grundform eines BCC-Gitters - acht Gitterpunkte an den Ecken und einer in der Mitte so in gleichartige Tetraeder unterteilt werden kann, dass jeder Punkt mit beliebiger Lage in dieser Grundform innerhalb eines dieser Tetraeder liegt. Für diese Punkte ist dann lediglich eine (lineare) Interpolation zwischen den Bilddaten an den Eckpunkten dieses Tetraeders erforderlich. Der Rechenaufwand wird dabei wesentlich reduziert - bei mindestens gleicher Bildqualität.

Die Projektionsbilddaten können für die eingangs erwähnten "volume rendering" oder "ray-tracing" -Verfahren benutzt werden. Berechnet man aber nur die Projektions-Bilddaten für Punkte, die in einer (beliebig orientierten) ebenen Schicht liegen, dann kann man aus dem dreidimensionalen Datensatz ein Bild eben dieser Schicht durch Interpolation ermitteln.

In Verbindung mit den Punkten und den ihnen zugeordneten Werten wird in den Ansprüchen und in der Beschreibung zwecks einfacherer Unterscheidung die folgende Terminologie benutzt: Die Punkte in dem zu erzeugenden zweidimensionalen Bild werden als „Bildpunkte" bezeichnet und die ihnen zugeordneten Werte als „Bildwerte". Die Punkte auf einem dreidimensionalen Gitter werden als „Gitterpunkte" bezeichnet und die ihnen zugeordneten Werte als „Bilddaten" (Einzahl: Wert). ".Die Punkte, die entlang eines Strahles liegen und auf einen Bildpunkt projiziert werden, werden als „Punkte" bezeichnet und die ihnen zugeordneten Werte als „Projektions-Bilddaten" (Einzahl: Projektions-Wert).

Eine bevorzugte Ausgestaltung der Erfindung ist in Anspruch 2 beschrieben. Eine andere Alternative bestünde darin, die auf einem anderen Gitter, z.B. einem einfachen kubischen Gitter rekonstruierten Bilddaten auf ein BCC-Gitter umzurechnen. Trotz des zusätzlichen Rechenaufwandes für die Umrechnung wäre auch diese Alternative im Hinblick auf den Rechenaufwand und die Bildqualität noch von Vorteil.

Anspruch 3 beschreibt ein bevorzugtes Anwendungsgebiet der Erfindung. Die Erfindung ist aber auch bei anderen Modalitäten anwendbar, beispielsweise bei Ultraschall- oder Magnet-Resonanz-Untersuchungen bzw. bei allen Methoden, bei denen eine auf einem dreidimensionalen Gitter abgetastete Funktion als zweidimensionales Bild dargestellt werden soll.

Anspruch 4 beschreibt ein bildgebendes System zur Durchführung des Verfahrens nach Anspruch 1.

Mit der Ausgestaltung nach Anspruch 5 kann die Rechengeschwindigkeit bei einem höheren Hardware-Aufwand erhöht werden. Bei fünf Speichern ist stets einen solche Zuordnung der Bilddaten zu den Speichern möglich, dass die für eine Interpolation benötigten Bilddaten gleichzeitig aus den Speichern ausgelesen werden können. Der Hardware-Aufwand ist aber geringer als der für die Verarbeitung eines an den Gitterpunkten eines kubischen Gitters erforderliche Aufwand, bei dem gleichzeitig auf acht Speicher zugegriffen werden müßte.

Anspruch 6 beschreibt eine bevorzugte Ausgestaltung des bildgebenden Systems, die auch mit einem Röntgen-Computer-Tomographen realisiert werden könnte, doch werden nach der weiteren Ausgestaltung gemäß Anspruch 7 Röntgensysteme bevorzugt bei denen Röntgenstrahler und Röntgenbildwandler an einem um wenigstens einer Achse schwenkbaren C-Bogen befestigt sind.

Die Erfindung wird nachstehend anhand der Zeichnungen näher erläutert. Es zeigen:

Fig. 1           ein Röntgensystem bei dem die Erfindung anwendbar ist,
Fig. 2           ein Ablaufdiagramm des erfindungsgemäßen Verfahrens,
Fig. 3a und 3b   die Grundelemente eines BCC-Gitters,
Fig. 4a und 4b   Grundelemente eines einfachen kubischen Gitters,
Fig. 5           die geometrischen Verhältnisse bei der Ableitung eines 2D-Bildes aus einem 3D-Datensatz,
Fig. 6           ein Ablaufdiagramm für den Interpolationsschritt bei Fig. 2,
Fig. 7a bis 7f   die dazu gehörenden geometrischen Verhältnisse und

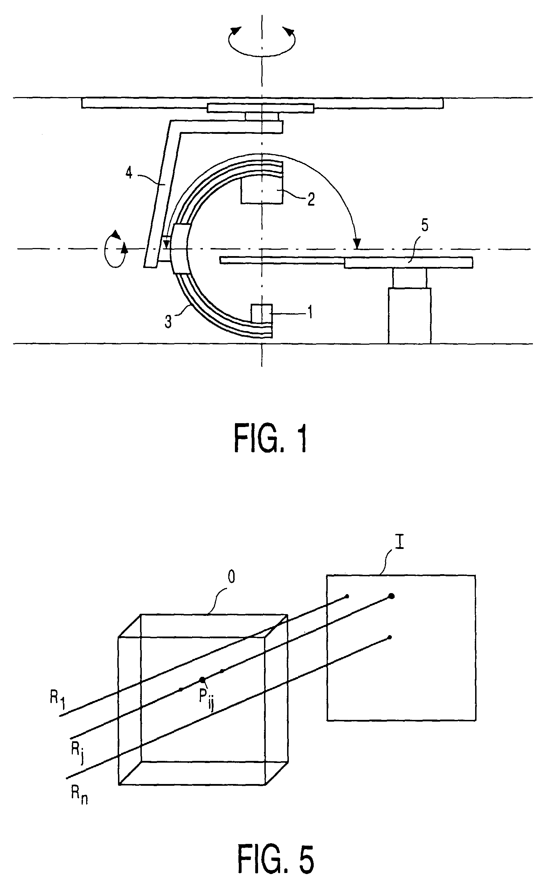

Das in Fig. 1 dargestellte Röntgensystem umfaßt einen Röntgenstrahler 1 und einen Bildwandler 2 in Form eines Röntgenbildverstärkers, die an den Enden eines C-förmigen Bogens 3 befestigt sind. Der Bogen 3 ist - um zwei zueinander senkrechte, horizontale Achsen schwenkbar - an einem Stativ 4 befestigt, das an der Decke verfahrbar sein kann oder auch am Fußboden. Es ist deshalb möglich, einen auf einem Patientenlagerungstisch 5 befindlichen Patienten aus allen möglichen Richtungen zu durchstrahlen. Das System 1,2 kann dabei auf einem Kreisbogen von mindestens 180 ° um den Patienten geschwenkt werden, wobei fortlaufend Röntgenaufnahmen erzeugt werden.

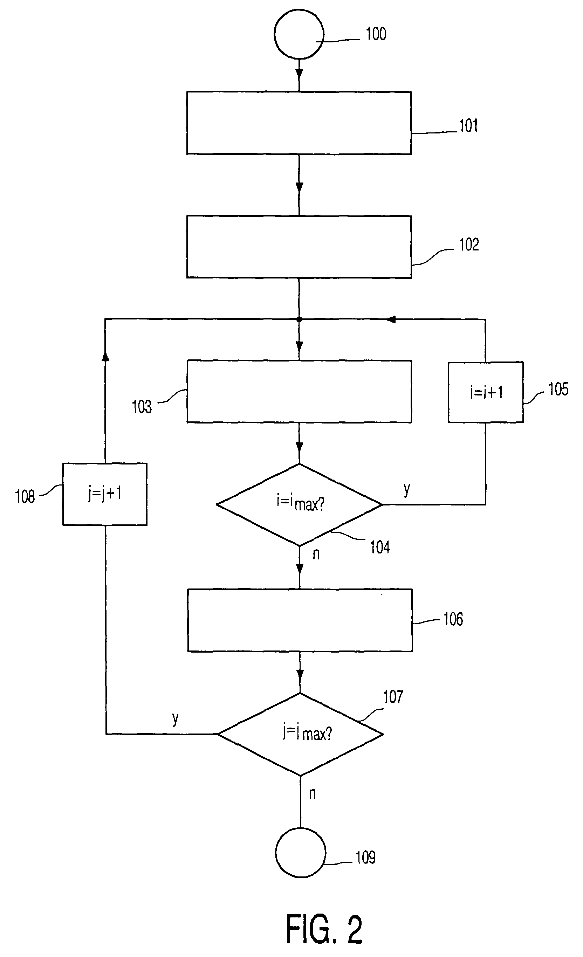

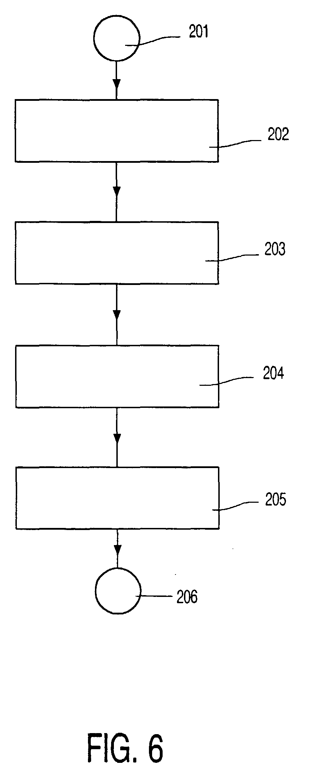

Aus den Röntgenaufnahmen eines solchen Bildlaufs - vorzugsweise aus den Röntgenaufnahmen zweier dieser Bildläufe auf relativ zueinander geneigten Kreisbögen - kann die Absorption des Objektes an Gitterpunkten eines regelmäßigen periodischen Gitters rekonstruiert werden. Die dazu erforderlichen Bildverarbeitungseinrichtung und die zur Ableitung eines 2D-Bildes aus dem auf diese Weise gewonnenen 3D-Datensatz sind in Fig. 1 nicht dargestellt. Ihr Aufbau und ihre Funktion ergibt sich jedoch anhand der in Fig. 2 und Fig. 6 dargestellten Programmabläufe.

Der Verfahrensablauf gestaltet sich gemäß Fig. 2 wie folgt:

Nach der Initialisierung im Schritt 100 werden im Schritt 101 die Meßwerte akquiriert, die zur Rekonstruktion der Absorption innerhalb des Objektes erforderlich sind. Dazu werden Röntgenstrahler 1 und Bildwandler 2- vorzugsweise auf zwei gegeneinander geneigten Bögen von wenigstens 180° - um das Objekt bewegt, wobei jeweils eine Vielzahl von Röntgenaufnahmen erzeugt werden. Die durch die Helligkeitswerte des Röntgenbildes definierten Meßwerte werden digitalisiert und der erwähnten BildverarbeitungsEinrichtung zugeführt, die daraus im Schritt 102 die Absorption des Objektes an den Gitterpunkten eines periodischen dreidimensionalen Gitters rekonstruiert. Die Rekonstruktion kann dabei nach einem an die Besonderheiten des C-Bogen-Systems angepaßten (aus der Computertomographie) bekannten Algorithmus erfolgen.

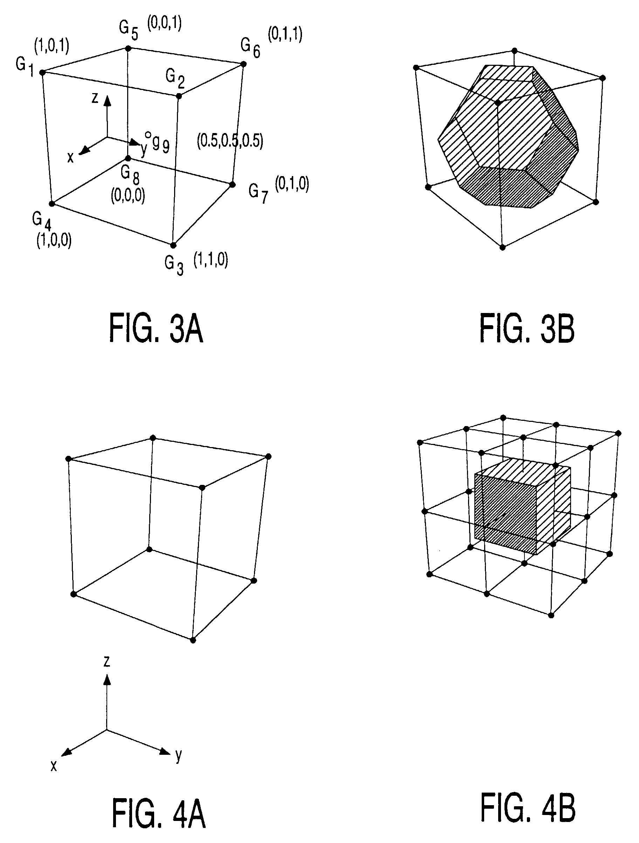

Die Rekonstruktion erfolgt an den Gitterpunkten eines BCC-Gitters. Ein BCC-Gitter besteht aus zwei identischen kubischen Subgittern, die in x-,y- und z-Richtung jeweils um den halben Abstand zweier benachbarter Punkte auf einem Subgitter gegeneinander versetzt sind (wobei angenommen ist, dass die Gitterlinien in x-,y- und z-Richtung verlaufen). Somit befindet sich jeder Gitterpunkt des einen Subgitters im Zentrum von acht Gitterpunkten des jeweils anderen Subgitters. Dies ist in Fig. 3a für ein Grundelement dargestellt. Man erkennt die acht Gitterpunkte $G_1.....G_8$ eines regelmä-

ßigen kubischen Subgitters, in deren Mitte sich ein Gitterpunkt $g_9$ des anderen Subgitters befindet. Umgekehrt befindet sich jeder der Gitterpunkte $G_1.....G_8$ im Zentrum je einer Zelle des anderen Subgitters, von dem in Fig. 3a lediglich ein einziger Gitterpunkt - $g_9$-dargestellt ist.

Jedem einzelnen Gitterpunkt auf diesen beiden Subgittern bzw. in dem BCC-Gitter läßt sich ein Volumenelement (Voxel) zuordnen, das alle die Punkte im Raum umschließt, die näher an diesem Gitterpunkt sind als an allen anderen Gitterpunkten. Ein solches Voxel ist in Fig. 3b dargestellt. Seine 14 Seitenflächen sind durch die Mittelebene zwischen dem Gitterpunkt ($g_9$) im Zentrum dieses Voxels und je einem der benachbarten Gitterpunkte definiert. Die Seitenflächen zwischen dem Mittelpunkt und den acht ihn umschließenden Gitterpunkten des anderen Subgitters sind sechseckig begrenzt, während die Seitenflächen zwischen dem Mittelpunkt ($g_9$) und den sechs Gitterpunkten vor und hinter, über und unter, links und rechts von diesem Gitterpunkt quadratisch sind. Das so gebildete Polyeder ist als "Oktahedron" bekannt.

Im Vergleich dazu ist in Fig. 4a das Grundelement eines einfachen kubischen Gitters dargestellt, das aus acht Gitterpunkten besteht, die auf den Ecken eines Würfels angeordnet sind. Fig. 4b stellt ein einzelnes Voxel eines solchen einfachen kubischen Gitters dar. Da jeder Gitterpunkt genau sechs am nächsten benachbarte Gitterpunkte hat, gibt es sechs in der Mitte zwischen je zwei benachbarten Gitterpunkten liegenden quadratische Grenzflächen, die zusammen wiederum einen Würfel bilden.

Wenn der Abstand der Gitterpunkte auf einem Subgitter nach Fig. 3a bzw. 3b 1,259mal so groß gewählt wird wie der Abstand der Gitterpunkte bei dem kubischen Gitter nach Fig. 4a bzw. 4b, dann haben die Voxel denselben Rauminhalt. Das Voxel nach Fig. 3b hat eine bessere Übereinstimmung mit der idealen Kugelform als das Voxel nach Fig.4b. Die größte Kugel, die man in das Voxel nach Fig. 3b einschreiben kann, hat einen um 12% größeren Radius als die Kugel, die gerade noch in das würfelförmige Voxel nach Fig. 4b paßt.

Wenn es nicht möglich ist, die Absorptionsverteilung unmittelbar an den Gitterpunkten eines BCC-Gitters zu rekonstruieren, muß sie nachträglich für ein solches Gitter berechnet werden. Wenn beispielsweise die Rekonstruktion auf einem einfachen kubischen Gitter erfolgt ist, kann auf einfachste Weise für jeden Kubus gemäß 4a ein Wert für einen im Zentrum liegenden zusätzlichen Gitterpunkt mittels einer Interpolation ermittelt werden, oder indem die Summe der an den einzelnen acht Gitterpunkten rekonstruierten Werte durch 8 dividiert wird.

In den Verfahrensschritten 103 ff wird ein zweidimensionales Bild aus dem dreidimensionalen Bild errechnet. Die geometrischen Grundlagen dazu sind in Fig. 5 dargestellt. Das Objekt O, dessen Absorption zuvor an den Gitterpunkten eines BCC-Gitters rekonstruiert worden ist, wird dabei durch zueinander vorzugsweise parallele Strahlen $R_1....R_j...R_n$ auf einzelne Bildpunkte eines zweidimensionalen Bildes I projiziert. Aus den Projektions-Bilddaten, die den einzelnen Punkten eines Strahls innerhalb des Objektes zugeordnet sind - wie beispielsweise der Punkt $P_{ij}$ dem Strahl $R_j$ - wird ein Bildwert für den zu dem Strahl gehörenden Bildpunkt in dem zweidimensionalen Bild I abgeleitet, beispielsweise indem die Summe bzw. die gewichtete Summe der Projektions-Bilddaten gebildet wird, die den Punkten auf dem betreffenden Strahl zugeordnet sind.

Im Schritt 103 wird für den Punkte $P_{ij}$ auf dem Strahl $R_j$ - und für alle anderen Punkte auf diesem und allen anderen Strahlen - durch eine noch zu erläuternde Interpolation von Bilddaten an den Gitterpunkten des BCC-Gitters ein Projektions-Wert ermittelt.

Im Schritt 104 erfolgt eine Abfrage, ob für sämtliche Punkte auf dem Strahl $R_j$ Projektions-Bilddaten errechnet worden sind. Ist dies nicht der Fall, wird für den nächsten Punkt auf dem Strahl (i=i+1, Schritt 105) im Schritt 103 ein Projektions-Wert durch Interpolation errechnet.

Wenn hingegen für sämtliche Punkte auf dem Strahl $R_j$ Projektions-Bilddaten errechnet worden sind, wird daraus im Schritt 106 ein Bildwert für den Bildpunkt abgeleitet, der diesem Strahl zugeordnet ist. Dieser Bildwert kann je nach Verfahren als (gewichtete) Summe der Projektions-Bilddaten oder aber als deren Minimal-, Maximal, Median- oder irgendein anderer Wert ermittelt werden.

Wenn im Schritt 107 festgestellt wird, dass noch nicht für sämtliche Strahlen ein Bildwert auf diese Weise bestimmt worden ist, wird für den nächsten Strahl (j = j+1; Schritt 108) die Folge der Schritte 103...107 wiederholt. Sind hingegen die Projektionsdaten für alle Strahlen berechnet, ist das zweidimensionale Bild komplettiert und das Verfahren - zumindest für den vorliegenden Datensatz - beendet (Block 109).

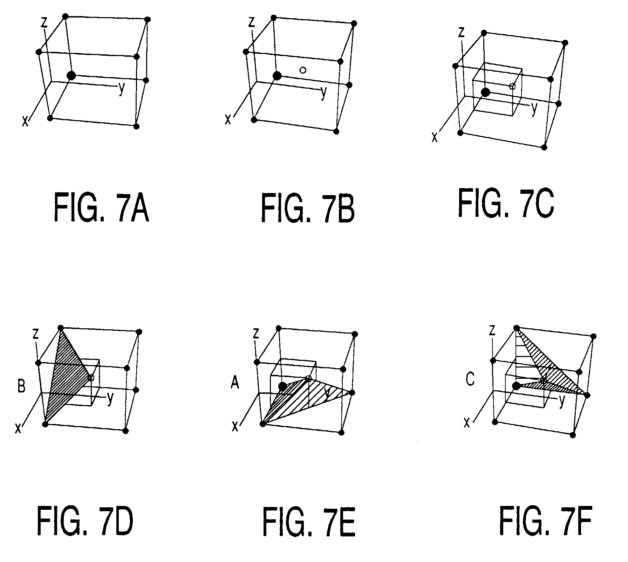

Im folgenden soll die im Schritt 103 erfolgende Interpolation anhand des Ablaufdiagramms nach Fig. 6 im einzelnen erläutert werden. Nach dem Start im Block 201 wird im Block 202 die Zelle eines der beiden Subgitter bestimmt, die den jeweiligen Punkt auf dem Strahl - wie z.B. den Punkt $P_{ij}$ - einschließt. Von dieser Zelle wird der auf der hinteren, unteren, linken Ecke befindliche Gitterpunkt (das ist in Fig 3a $G_8$) bzw. der Adressenbereich bestimmt, in dem die Bilddaten an den Gitterpunkten dieser Zelle gespeichert sind. Diesem in Fig 7a besonders fett dargestellten Gitterpunkt wird der Ursprung eines kartesischen Koordinatensystems zugeordnet, dessen Koordinatenachsen mit den Gitterlinien zusammenfallen. Wenn der Abstand der Gitterpunkte voneinander 1 beträgt, hat in diesem Koordinatensystem beispielswiese der Gitterpunkt $G_6$ die Koordinaten (0,1,1) - vgl. Fig 3a - und der Punkt $P_{ij}$ die Koordinaten $q = (q_x, q_y, q_z)$, wobei $q_x$, $q_y$ und $q_z$ zwischen 0 und 1 beträgt. Zugleich wird der Mittelpunkt ($g_9$, in Fig. 3a) dieser Zelle mit den Koordinaten (½, ½, ½) bestimmt bestimmt, der ein Gitterpunkt des anderen Subgitters ist (vgl. Figuren 7a und 7b).

Der Wert für diesen zentralen Punkt beeinflußt den Projektions-Wert jedes Punktes innerhalb der zugehörigen Zelle.

Im nächsten Schritt 203 wird der Sub-Kubus bestimmt, der 1/8 des Volumens der Zelle ausfüllt und in dem sich der Punkt $P_{ij}$ befindet. Dieser Sub-Kubus wird durch einen der 8 Gitterpunkte des einen Subgitters und den Punkt ($g_9$) im Zentrum definiert. Wenn $q_x < 0,5$ und $q_y < 0,5$ und $q_z < 0,5$ sind, befindet sich der Sub-Kubus im linken, hinteren, unteren Abschnitt der Zelle bei dem Gitterpunkt $G_8$, wie in Fig. 7c dargestellt. Wenn wenigstens einer der Werte $q_i$ ($q_i$ = $q_x$, $q_y$, oder $q_z$) größer als 0,5 ist, ist der Sub-Kubus einem der sieben anderen Gitterpunkt des Subgitters zugeordnet. In diesem Fall wird für den folgenden Schritt der Wert $q_i$ ersetzt durch 1-$q_i$.

In den Schritten 202 und 203 sind bereits zwei Gitterpunkte ($G_8$ und $g_9$) bestimmt worden, die die Eckpunkte eines Tetraeders bilden, das den gesuchten Punkt $P_{ij}$ einschließt. Die zwei Weiteren Eckpunkte des Tetraeders, die zugleich Gitterpunkte der in Fig. 7a ff dargestellten Zelle sind, werden im Schritt 204 aus drei zusätzlichen Gitterpunkten bestimmt, die gegenüber dem Gitterpunkt $G_8$, dem der Sub-Kubus zugeordnet ist (Fig. 7c), entweder in x- oder in y- oder in z-Richtung versetzt sind - im Beispiel sind das $G_4$, $G_7$, und $G_5$, vgl. Fig. 3a. Insgesamt sind also die Bilddaten an fünf Gitterpunkten für die Berechnung der Projektions-Bilddaten an Punkten in einem Sub-Kubus von Interesse.

Dabei gibt es drei Möglichkeiten, die in den Figuren 7d, 7e und 7f skizziert sind. Bei der in Fig. 7d angedeuteten Möglichkeit, befinden sich die beiden übrigen Gitterpunkte in der x-,z-Ebene. Bei Fig. 7e befinden sich die beiden zusätzlichen Gitterpunkte, die das Tetraeder definieren, in der x-,y-Ebene. Die dritte Möglichkeit ist in Fig. 7f dargestellt. Die beiden zusätzlichen Gitterpunkte, liegen in diesem Fall in der y-,z-Richtung. Eines dieser Tetraeder wird - abhängig von den drei Koordinaten $q_x$, $q_y$, oder $q_z$ - für die Interpolation herangezogen.

Dies und die nachfolgende Interpolation wird im folgenden auf einer verallgemeinerten Basis erläutert:

Zunächst wird ein Wert - $f_3$ - im zentralen Gitterpunkt $g_9$ bereitgestellt gemäß

$$f_3 = w(½\ ½,\ ½) \tag{1}$$

w() stellt den aus der 3D-Rekonstruktion resultierenden Wert an der Stelle mit den Koordinaten () dar. Der Wert $f_3$ wird für die Berechnung der Projektions-Bilddaten an sämtlichen Punkten benötigt, die sich in der Zelle befinden.

Dann wird der Wert $f_0$ an dem Gitterpunkt ($G_8$) berechnet, der neben $g_9$ einen Eckpunkt des Sub-Kubus

$$f_0 = w(i,j,k) \tag{2}$$

bildet. Dabei gilt für i, j, k

$i = 0$ für $q_x \leq 0,5$ und $i = 1$ für $q_x > 0,5$
$j = 0$ für $q_y \leq 0,5$ und $j = 1$ für $q_y > 0,5$
$k = 0$ für $q_z \leq 0,5$ und $k = 1$ für $q_z > 0,5$

Schließlich werden die Bilddaten an den erwähnten drei weiteren Gitterpunkten bereitgestellt:

$$f_x = w\,(i+1,j,k) \text{ für } q_x \leq 0,5 \qquad \text{und } f_x = w\,(i-1,j,k) \text{ für } q_x > 0,5 \tag{3}$$

$$f_y = w\,(i,j+1,k) \text{ für } q_y \leq 0,5 \qquad \text{und } f_y = w\,(i,j-1,k) \text{ für } q_y > 0,5 \tag{4}$$

$$f_z = w\,(i,j,k+1) \text{ für } q_z \leq 0,5 \qquad \text{und } f_z = w\,(i,jk-1) \text{ für } q_z > 0,5 \tag{5}$$

Danach erfolgt

$$q_x = q_x \text{ für } q_x \leq 0,5 \qquad \text{und } q_x = 1-q_x \text{ für } q_x > 0,5 \tag{6}$$

$$q_y = q_y \text{ für } q_y \leq 0,5 \qquad \text{und } q_y = 1-q_y \text{ für } q_y > 0,5 \tag{7}$$

$$q_z = q_z \text{ für } q_z \leq 0,5 \qquad \text{und } q_z = 1-q_z \text{ für } q_z > 0,5 \tag{8}$$

Danach werden von den Bilddaten $f_x$, $f_y$, und $f_z$ in Abhängigkeit von den Koordinaten $q_x$, $q_y$ und $q_z$ des Punktes $P_{ij}$ die beiden heranzuziehenden Bilddaten wie folgt bestimmt:

Unter der Bedingung

$$q_x \leq q_y \tag{I}$$

wird gesetzt:

$$f_1 = f_x \qquad \text{und } u = q_x \tag{9}$$

Unter der weiteren Bedingung

$$q_y \leq q_z \tag{II}$$

wird weiter

$$f_2 = f_y \qquad \text{und } v = q_y \qquad \text{und } w = q_z \tag{10}$$

Wenn die Bedingung II nicht erfüllt ist, erfolgt stattdessen die Festsetzung

$$f_2 = f_z \qquad \text{und } w = q_y \qquad \text{und } v = q_z \tag{11}$$

Wenn die Bedingung I nicht erfüllt ist, wird - anstelle von Gleichung (9)

$$f_1 = f_y \qquad \text{und } u = q_y$$

gesetzt, und unter der weiteren Bedingung

$$q_x \leq q_z \tag{III}$$

wird weiter

$$f_2 = f_x \qquad \text{und } v = q_x \qquad \text{und } w = q_z \tag{12}$$

Wenn die Bedingung III nicht erfüllt ist, erfolgt stattdessen die Festsetzung

$$f_2 = f_z \qquad \text{und } w = q_x \qquad \text{und } v = q_z \tag{13}$$

Nachdem auf diese Weise - ebenfalls im Schritt 204 - mit wenigen Vergleichen die Werte $f_0$, $f_1$ und $f_2$ sowie u,v und w bestimmt sind, wird im Schritt 205 durch eine einfache lineare Interpolation ein Absorptionswert für den Punkt Pij errechnet. Die Interpolation erfolgt nach der Beziehung

$$b_{ij} = a + b \cdot u + c \cdot v + d \cdot w \tag{14}$$

Dabei ist $b_{ij}$ der für den Punkt $P_{ij}$ berechnete Projektions-Wert, und a,b,c und d sind Faktoren, die aus den Bilddaten (Absorptionswerten) an den Gitterpunkten des Tetraeders wie folgt abgeleitet werden:

$$a = f_0 \tag{15}$$

$$b = f_1 - a \tag{16}$$

$$c = f_2 - a \tag{17}$$

$$d = 2(f_3 - a) - b - c \tag{18}$$

Diese Interpolation erfordert also lediglich 8 Additionen und 3 Multiplikationen - wenn man die Multiplikation mit 2 vernachläßigt, weil sie lediglich eine einfache Verschiebungs-Operation um eine Stelle nach links erfordern. Zusammmen mit den 3 Vergleichen (äquivalent zu 3 Additionen) im Schritt 204 sind also insgesamt 11 Additionen und 3 Multiplikationen erforderlich, was deutlich weniger ist als die 14 Additionen und 7 Multiplikationen, die bei einem einfachen kubischen Gitter erforderlich waren.

Nachdem der Wert für $P_{ij}$ auf diese Weise bestimmt worden ist, ist der Interpolationsschritt beendet (Block 206).

Eine deutliche Beschleunigung der linearen Interpolation im Schritt 205 läßt sich erreichen, wenn die Absorptionswerte bzw. Bilddaten in fünf gleichzeitig auslesbaren Speichern gespeichert sind. Die Absorptionswerte bzw. Bilddaten für die fünf Gitterpunkte, aus denen die jeweils drei möglichen Tetraeder gebildet werden, müssen dabei stets auf alle fünf Speicher verteilt sein, weil Sie dann gleichzeitig aus den Speichern ausgelesen werden können. Dies ist beispielsweise dann der Fall, wenn von einer Zelle stets nur die diagonal einander gegenüberliegenden Gitterpunkten (z.B. $G_8$ und $G_2$ in Fig 3A) zugeordneten Absorptionswerte in demselben Speicher gespeichert sind und wenn die Absorptionswerte für die Gitterpunkte (z.B. $g_9$) des anderen Subgitters gesondert in einem der fünf Speicher gespeichert sind.

Eine dazu analoge Beschleunigung der linearen Interpolation ergäbe sich zwar auch, wenn die Bilddaten des dreidimensionalen Datensatzes wie üblich - an den Gitterpunkten eines kubischen Gitters vorliegen. Man müßte dann aber die Bilddaten für jede Zelle auf acht Speicher verteilen und diese Bilddaten für die Interpolation gleichzeitig aus den acht Speichern auslesen. Das gleichzeitige Auslesen und Verarbeiten von Daten aus acht Speichern ist aber wesentlich aufwändiger als das Auslesen und Verarbeiten von nur fünf Speichern.

Bei dem anhand der Figuren 5a und 5b, 6, und 7 erläuterten Ausführungsbeispiel ist jedes Tetraeder durch 3 Gitterpunkte des einen Subgitters und den zugehörigen Mittelpunkt ($g_9$) des anderen Subgitters definiert. Da jeder Punkt $P_{ij}$ sich aber stets auch in einer Zelle des anderen Subgitters befindet, ist es auch möglich, ein Tetraeder heranzuziehen, von dem drei Eckpunkte durch die Gitterpunkte des anderen Subgitters und einen Gitterpunkt des einen Subgitters definiert werden. Man kann auch beide Möglichkeiten heranziehen und den Punkt $P_{ij}$ einen Wert zuordnen, der den Mittelwert, der sich aus den beiden Berechnungen ergebenden Werte entspricht.

## Patentansprüche

1.  Verfahren zur Darstellung eines an den Gitterpunkten eines regelmäßigen Gitters durch einen dreidimensionalen Datensatz definierten Objektes durch ein zweidimensionales Bild, wobei die Bildwerte an den Bildpunkten, aus denen sich das zweidimensionale Bild zusammensetzt, aus den Bilddaten des dreidimensionalen Datensatzes abgeleitet werden, die je einem Strahl durch das Objekt zugeordnet sind,
    gekennzeichnet durch folgende Schritte:

    a) Ermittlung der Bilddaten des dreidimensionalen Datensatzes an den Gitterpunkten eines BCC-Gitters,
    b) Berechnung von Projektions-Bilddaten an Punkten auf den Strahlen durch Interpolation der Bilddaten an vier Gitterpunkten des BCC-Gitters, die die Eckpunkte eines Tetraeders bilden, das je einen der Punkte umschließt,
    c) Ableitung je eines Bildwertes aus den je einem der Strahlen zugeordneten Projektions-Bilddaten.

2.  Verfahren nach Anspruch 1 für die bildgebende medizinische Diagnostik gekennzeichnet durch die Schritte:

    a) Akquisition von Meßwerten, die einen physikalischen Parameter des Objektes definieren,
    b) Rekonstruktion der Parameter an den Gitterpunkten eines BCC-Gitters zur Erzeugung des dreidimensionalen Datensatzes.

3.  Verfahren nach Anspruch 2,
    dadurch gekennzeichnet,
    dass die Meßwerte mittels eines das Objekte aus verschiedenen Richtungen durchstrahlenden Röntgensystems akquiriert werden.

4.  Bildgebendes System für die medizinische Diagnostik zur Durchführung des Verfahrens nach Anspruch 1 mit Mitteln zur Darstellung eines an den Gitterpunkten eines regelmäßigen Gitters durch einen dreidimensionalen Datensatz definierten Objektes durch ein zweidimensionales Bild, wobei die Bildwerte an den Bildpunkten, aus denen sich das zweidimensionale Bild zusammensetzt, aus den Bilddaten des dreidimensionalen Datensatzes abgeleitet werden, die je einem Strahl durch das Objekt zugeordnet sind,
    gekennzeichnet durch

    a) Mittel zur Ermittlung der Bilddaten des dreidimensionalen Datensatzes an den Gitterpunkten eines BCC-Gitters,
    b) Berechnungsmittel zur Berechnung von Projektions-Bilddaten an Punkten auf den Strahlen durch Interpolation der Bilddaten an vier Gitterpunkten des BCC-Gitters, die die Eckpunkte eines Tetraeders bilden, das je einen der Punkte umschließt,
    c) Mittel zur Ableitung je eines Bildwertes aus den je einem der Strahlen zugeordneten Projektions-Bilddaten.

5.  Bildgebendes System nach Anspruch 4,
    dadurch gekennzeichnet,
    dass den Berechnungsmitteln fünf Speicher zugeordnet sind, in denen die Bilddaten so gespeichert sind, dass die für eine Interpolation heranzuziehenden Bilddaten gleichzeitig aus den fünf Speichern auslesbar sind.

6. Bildgebendes System nach Anspruch 4,
   <u>dadurch gekennzeichnet,</u>
   dass zur Akquisition von Meßwerten für die Absorption der Röntgenstrahlung durch ein Objekt ein Röntgenstrahler zur Durchstrahlung des Objektes aus einer Vielzahl von Richtungen und ein damit gekoppelter Röntgen-Bildwandler vorgesehen sind.

7. Bildgebendes System nach Anspruch 6,
   <u>dadurch gekennzeichnet,</u>
   dass der Röntgenstrahler und der Röntgen-Bildwandler an einem um mindestens eine Achse schwenkbaren C-förmigen Bogen befestigt sind.

FIG. 1

FIG. 5

FIG. 2

FIG. 3A

FIG. 3B

FIG. 4A

FIG. 4B

201

202

203

204

205

206

# FIG. 6

FIG. 7A

FIG. 7B

FIG. 7C

FIG. 7D

FIG. 7E

FIG. 7F